# EUROPEAN PATENT APPLICATION

(11) **EP 1 432 265 A1**
(43) Date of publication of application: **23.06.2004**
(21) Application number: 02768026.3
(22) Date of filing: 24.09.2002
(51) Int. Cl.: H04Q 7/38, H04B 1/707

(54) **CELL SEARCH METHOD AND COMMUNICATION TERMINAL APPARATUS**

(30) Priority: 26.09.2001 JP 2001295176; 17.05.2002 JP 2002143192
(71) Applicant: MATSUSHITA ELECTRIC INDUSTRIAL CO., LTD., Kadoma-shi, Osaka 571-8501 (JP)
(72) Inventor: TAKAHASHI, Hideyuki, Yokosuka-shi, Kanagawa 239-0841 (JP); KITAGAWA, Keiichi, Yokosuka-shi, Kanagawa 239-0841 (JP); HAGA, Hiroki, Yokosuka-shi, Kanagawa 239-0841 (JP); HAYASHI, Masaki, Yokosuka-shi, Kanagawa 239-0847 (JP); HIRAMATSU, Katsuhiko, Yokosuka-shi, Kanagawa 238-0031 (JP)
(74) Representative: Grünecker, Kinkeldey, Stockmair & Schwanhäusser Anwaltssozietät
(86) International application number: PCT/JP2002/009784
(87) International publication number: WO 2003/028399

(57) **Abstract**

Synchronization code identification and synchronization timing detection are divided into two stages, with narrowing down of synchronization codes or synchronization timing being performed, or one or other being found precisely, based on rough correlation values between a received signal and candidate synchronization codes in the first stage processing (ST1 through ST7), and precise synchronization code identification and synchronization timing detection being performed in the second stage processing (ST8 through ST12).

## Description

### Technical Field

The present invention relates to a cell-search method and communication terminal apparatus of a mobile communication system using CDMA (Code Division Multiple Access).

### Background Art

In a conventional mobile communication system of this kind, a communication terminal searches for the cell to which it belongs when power is turned on (this search being called the "initial cell search"). Then, when a communication terminal moves between cells, it searches for the cell into which it is moving (this search being called a "standby cell search"). A number of methods are used for these cell searches.

Of these, the following kind of cell search method is stipulated in 3GPP TS25.224 V4.1.0 (2001-06) (3rd Generation Partnership Project Technical Specification group radio access network), Physical Layer Procedures (TTD) pp36-pp37 Annex D (informative) "Cell search procedure for 1.28 Mcps TDD".

That is to say, the above document stipulates a cell search processing procedure for TD (Time Division)-SCDMA (Synchronous Code Division Multiple Access). In a TD-SCDMA cell search, downlink synchronization code synchronization and identification, scrambling code and basic midamble code identification, multiframe control synchronization, and BCH (Broadcast CHannel) information acquisition are performed.

As the first stage in this processing, identification of which of 32 kinds of downlink synchronizationcodeshasbeensent, and synchronization, are carried out. This is done by finding the correlations between the received signal and the 32 kinds of downlink synchronization codes, using matched filters, and detecting the peak correlation value.

A unique scrambling code and code group corresponding to that scrambling code are assigned to each cell. Different code groups are assigned to adjacent cells to prevent misidentification.

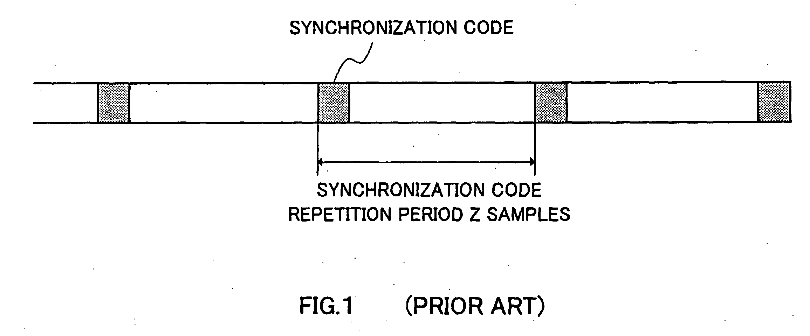

As shown in FIG. 1, a base station apparatus transmits a downlink synchronization code representing the code group at predetermined timing.

When performing an initial cell search, a communication terminal apparatus detects the slot timing of the cell to which it belongs, and identifies the code group, by detecting the downlink synchronization code. Using a correlator, etc., the communication terminal apparatus then identifies the scrambling code assigned to the cell to which it belongs from among the scrambling codes belonging to the identified code group.

Thus, in a communication terminal apparatus supporting TD-SCDMA communication, scrambling code identification is performed by detecting the synchronization timing and code group.

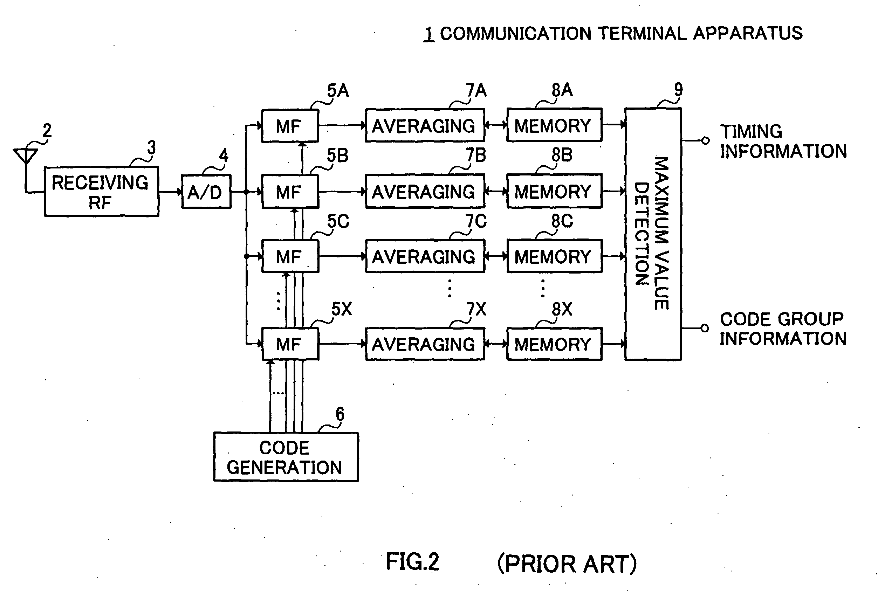

This type of communication terminal apparatus actually carries out a cell search by means of the kind of configuration shown in FIG.2. The communication terminal apparatus 1 converts a received signal received by an antenna 2 to a baseband signal by means of down-conversion performed by a radio receiving section (receiving RF) 3. The baseband signal is converted to a digital signal by an analog-digital conversion section (A/D) 4, and sent to matched filters (MF) 5A through 5X.

The number of matched filters 5A through 5X provided is the same as the number of candidate synchronization codes (X). Each of matched filters 5A through 5X calculates the correlation between a received baseband signal and a candidate synchronization code input from a code generation section 6. The correlation values obtained by means of matched filters 5A through 5X are stored in memories 8A through 8X via averaging sections 7A through 7X corresponding to matched filters 5A through 5X. Averaging sections 7A through 7X read the correlation values stored in memories 8A through 8X and average correlation values for a plurality of frames, and store the results again in memories 8A through 8X.

A maximum value detection section 9 detects the maximum correlation value at each sampling point for the synchronization codes stored in memories 8A through 8X, and thereby identifies the synchronization code matching the received synchronization code and also detects the synchronization timing of the received synchronization code. Maximum value detection section 9 then outputs the identified synchronization code as code group information, and also outputs the detected synchronization timing as timing information.

The communication terminal apparatus identifies the synchronization code with the highest correlation value as its own synchronization code, and identifies the code group by means of this synchronization code. Following this, the communication terminal apparatus identifies the scrambling code by means of a correlator or the like (not shown), using the code group information and timing information.

Thus, with a conventional cell search method, a correlation value is stored in memory for each candidate synchronization code, and a station detects the synchronization code corresponding to the cell to which it belongs by detecting the maximum value of the stored correlation values.

In the above-described cell search method, synchronization code identification and sample-unit timing detection are carried out simultaneously in the first stage, and there is thus a problem in that a large memory capacity is necessary.

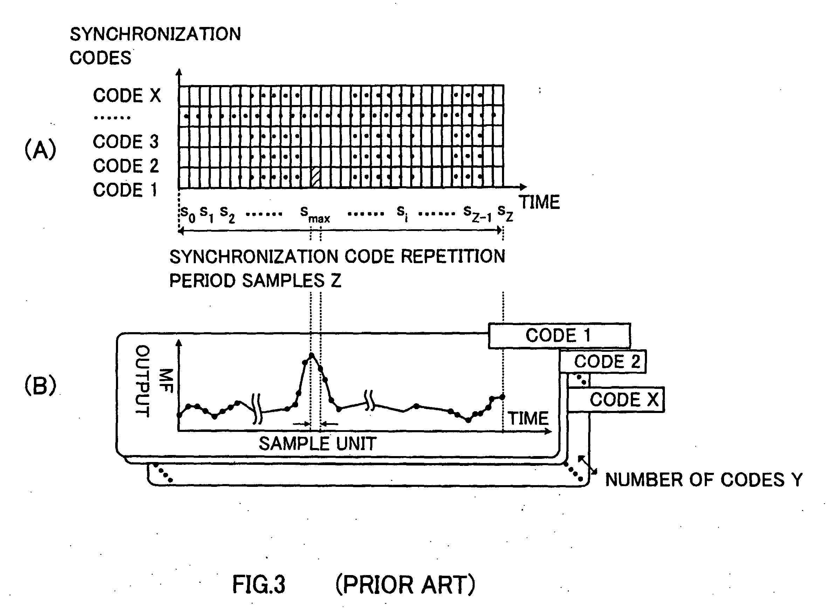

FIG.3 illustrates the concept of memories 8A through 8X provided in a conventional communication terminal apparatus 1. Delay profiles of correlation values output from matched filters 5A through 5X (MF outputs) are shown in FIG.3 (B). Memories 8A through 8X store correlation values at predetermined sampling intervals for each candidate synchronization code. That is to say, one unit in FIG.3 (A) represents one item of correlation value data.

If the number of synchronization codes is here designated X and the number of samples for one frame of synchronization codes is designated Z (see FIG.1), the number of data stored in memories 8A through 8X is (X×Z). In order for a communication terminal apparatus to identify, and detect the timing of, the synchronization code of the cell to which that communication terminal apparatus belongs, it is actually necessary for sampling data for one frame to be stored in all of memories 8A through 8X.

Assuming that one frame is composed of 6400 chips, 32 different downlink synchronization codes are provided, andmatched filters 5A through 5X find a correlation value every 1/2-chip period, the number of data stored in memories 8A through 8X is 6400×2×32 = 409,600.

Thus, with a communication terminal apparatus that performs synchronization code identification and synchronization timing detection simultaneously in a cell search, there is a problem in that a very large memory capacity is necessary. For communication terminal apparatuses, which are required to be small in size, this imposes a severe burden in hardware terms.

### Disclosure of Invention

It is an object of the present invention to provide a cell search method and communication terminal apparatus that enable the required memory capacity to be reduced.

This object is achieved by dividing synchronization code identification and synchronization timing detection into two stages; performing narrowing down of synchronization codes or synchronization timing, or finding one or other precisely, based on rough correlation values between a received signal and candidate synchronization codes in the first stage processing; and performing precise synchronization code identification and synchronization timing detection in the second stage processing.

### Brief Description of Drawings

FIG.1 is a drawing showing the configuration of a frame of a received signal that includes a synchronization code received during a cell search;
FIG.2 is a block diagram showing the configuration of a conventional communication terminal apparatus;
FIG.3 is a conceptual diagram provided to explain the data stored in memory, synchronization timing detection processing, and synchronization code identification processing, in a conventional communication terminal apparatus;
FIG.4 is a block diagram showing the configuration of a communication terminal apparatus according to Embodiment 1 of the present invention;
FIG.5 is a drawing provided to explain the data stored in memory, synchronization code identification processing, and synchronization timing detection processing, in the communication terminal apparatus in FIG.4;
FIG.6 is a flowchart provided to explain the operation ofa communication terminal apparatus according to Embodiment 1;
FIG.7 is a block diagram showing the configuration of a communication terminal apparatus according to Embodiment 2 of the present invention;
FIG.8 is a flowchart provided to explain the operation of a communication terminal apparatus according to Embodiment 2;
FIG.9 is a block diagram showing the configuration of a communication terminal apparatus according to Embodiment 3 of the present invention;
FIG.10 is a drawing provided to explain the data stored in memory, synchronization code identification processing, and synchronization timing detection processing, in the communication terminal apparatus in FIG.9;
FIG.11 is a flowchart provided to explain the operation of a communication terminal apparatus according to Embodiment 3;
FIG.12 is a block diagram showing the configuration of a communication terminal apparatus according to Embodiment 4 of the present invention;
FIG.13 is a flowchart provided to explain the operation of a communication terminal apparatus according to Embodiment 4;
FIG. 14 is a block diagram showing the configuration of a communication terminal apparatus according to Embodiment 5 of the present invention;
FIG.15 is a drawing provided to explain the data stored in memory, synchronization timing detection processing, and synchronization code identification processing, in the communication terminal apparatus in FIG.14;
FIG.16 is a flowchart provided to explain the operation of a communication terminal apparatus according to Embodiment 5;
FIG.17 is a block diagram showing the configuration of a communication terminal apparatus according to Embodiment 6 of the present invention;
FIG.18 is a flowchart provided to explain the operation of a communication terminal apparatus according to Embodiment 6;
FIG.19 is a block diagram showing the configuration of a communication terminal apparatus according to Embodiment 7 of the present invention;
FIG.20 is a drawing provided to explain the data stored in memory, synchronization timing detection processing, and synchronization code identification processing, in the communication terminal apparatus in FIG.19;
FIG.21 is a flowchart provided to explain the operation of a communication terminal apparatus according to Embodiment 7;
FIG.22 is a block diagram showing the configuration of a communication terminal apparatus according to Embodiment 8 of the present invention;
FIG.23 is a flowchart provided to explain the operation of a communication terminal apparatus according to Embodiment 8; and
FIG.24 is a block diagram showing the configuration of the correlation value acquisition section of a communication terminal apparatus according to another embodiment.

### Best Mode for Carrying out the Invention

With reference now to the accompanying drawings, embodiments of the present invention will be explained in detail below.

### (Embodiment 1)

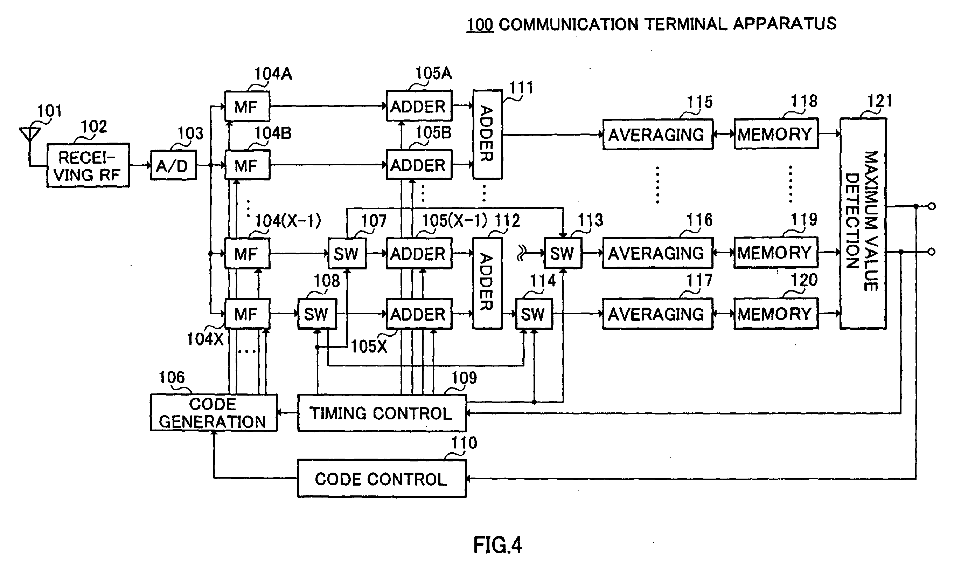

FIG.4 shows a communication terminal apparatus according to Embodiment 1 of the present invention, with reference numeral 100 designating the overall apparatus. Communication terminal apparatus 100 identifies the synchronization code of the cell to which it belongs by finding a correlation value between a received signal that includes a downlink synchronization code (code group: herein after referred to simply as "synchronization code"), received from the radio base station of the cell to which the communication terminal apparatus belongs, and a plurality of candidate synchronization codes. At the same time, the communication terminal apparatus detects the timing of synchronization with the received synchronization code.

Communication terminal apparatus 100 according to this embodiment performs synchronization code identification and synchronization timing detection roughly as a first-stage processing, and performs synchronization code identification and synchronization timing detection with high precision as a second-stage processing.

Communication terminal apparatus 100 converts a received signal received by an antenna 101 to a baseband signal by means of down-conversion performed by a radio receiving section (receiving RF) 102. The baseband signal is converted to a digital signal by an analog-digital conversion section (A/D) 103, and sent to matched filters (MF) 104A through 104X.

The number of matched filters 104A through 104X provided is the same as the number of candidate synchronization codes (X) (where X = 32, for example). Each of matched filters 104A through 104X calculates the correlation between a received baseband signal and a candidate synchronization code input from a code generation section 106. The correlation values obtained by means of 1st through (X-2)'th matched filters 104A through 104 (X-2) are input to corresponding adders 105A, 105B, ... . The correlation values obtained by means of (X-1)'th and X'th matched filters 104 (X-1) and 104X are sent to adders 105(X-1) and 105X, or switches 113 and 114, via switches (SW) 107 and 108.

Adders 105A through 105X calculate time direction added correlation values by adding in the time direction, for every predetermined number L of sampling data, correlation values input from corresponding matched filters 104A through 104X. These time direction added correlation values are then sent to adders 111, ..., 112.

Here, as first-stage processing, communication terminal apparatus 100 divides X candidate synchronization codes into units of Y candidate synchronization codes, and by comparing the sizes of the correlation values of these units, narrows down the synchronization codes subject to identification from X candidate synchronization codes to the candidate synchronization codes within one unit (that is, to Y candidate synchronization codes). In FIG.4, only two adders, 111 and 112, are shown for simplicity, and two time direction added correlation values are input to these adders 111 and 112, but in reality the number of adders 111 and 112 provided is (X/Y), and Y time direction added correlation values are input to adders 111, ..., 112.

Adders 111, ..., 112 add time direction correlation values at each point in time in the code direction for Y time direction added correlation values, respectively. As a result, the added correlation values output from adders 111, ..., 112 are rough correlation values in both the time direction and the code direction.

The added correlation values obtained by means of adders 111, ..., 112 are sent to averaging sections 115 through 117 either directly or via switches 113 and 114. Averaging sections 115 through 117 average added correlation values for a plurality of frames. By this means, added correlation values for which the effect of fading, etc., has been reduced are stored in memories 118 through 120.

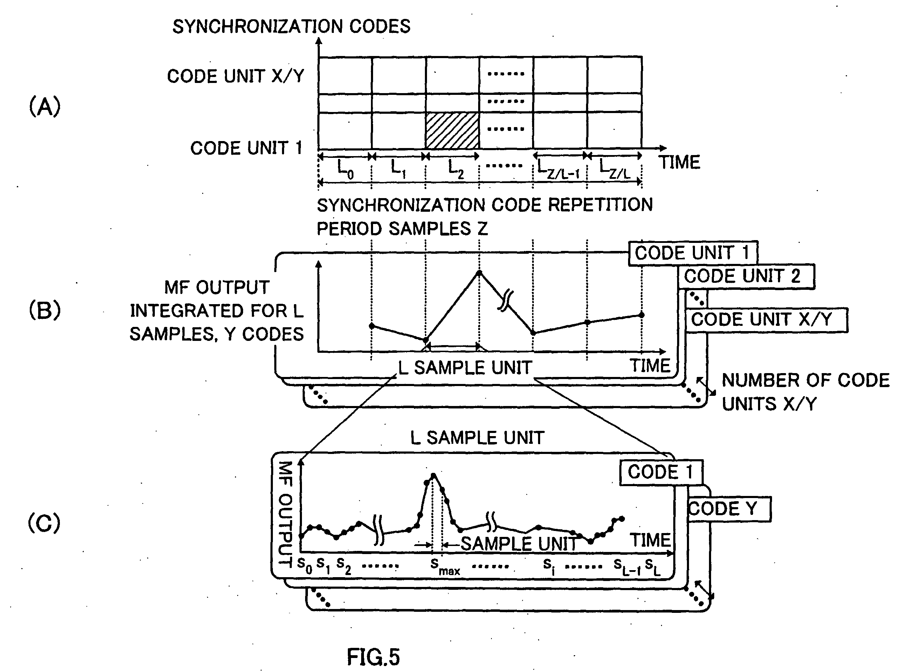

Thus, if the number of correlation value samples for one frame obtained by means of matched filters 104A through 104X is designated Z, then, as shown in FIG.5 (A), the number of added correlation values added in the time direction and code direction that are stored in memories 118 through 120 is [number of code units (X/Y) × number of samples ((Z/L)+1)]. Therefore, the number of data stored in memories 118 through 120 is approximately 1/(Y×L), as compared with the case where correlation values are stored directly into memories 118 through 120 from matched filters 104A through 104X. As a result, the required memory capacity can be greatly reduced.

Maximum value detection section 121 finds the highest added correlation value among the added correlation values stored in memories 118 through 120. The code unit in which the maximum added correlation value was obtained is then reported to a code control section, and the timing at which the maximum added correlation value was obtained is reported to a timing control section.

Communication terminal apparatus 100 then proceeds to detailed synchronization code identification and detailed synchronization timing detection processing as second-stage processing.

Code control section 110 instructs code generation section 106 to generate only synchronization codes within the code unit from which the maximum added correlation value was obtained. By this means, code generation section 106 generates Y synchronization codes within the same code unit, and sends these to Y matched filters 104(X-1) and 104X. Because of drawing space limitations, in this embodiment a case is described in which Y = 2, but in reality a larger value than this is selected for Y.

Matched filters 104(X-1) and 104X to which these synchronization codes are sent calculate correlation values between the received signal and synchronization codes, and send these to switches 107 and 108. Switches 107 and 108 are controlled by timing control section 109, and in the second-stage processing, send the input correlation values directly to switches 113 and 114 without passing via the two adders 105(X-1) and 112, or 105X and 112.

By this means, correlation value data for Z samples are output to each of switches 113 and 114 for each synchronization code. Switches 113 and 114 are controlled by timing control section 109, and output only correlation values of L samples in the vicinity of the rough synchronization timing obtained in the first-stage processing.

As a result, as shown in FIG.5 (B) and (C) , detailed correlation values of L samples are output from each of switches 113 and 114 for each synchronization code within the code unit in which the maximum correlation value was detected in the first-stage processing. The detailed correlation values of L samples output from each of switches 113 and 114 are passed to averaging sections 116 and 117, where average values are calculated for a plurality of frames, after which the values are stored in memories 119 and 120.

Thus, in communication terminal apparatus 100, the overall memory capacity required can be greatly reduced by switching switches 107, 108, 113, and 114 as appropriate between first-stage processing and second-stage processing, so that memories 118 through 120 used in the first-stage processing are also used in the second-stage processing.

That is to say, by dividing synchronization code identification and synchronization timing detection processing into two processing stages, the memory capacity required in the first stage is reduced, andmemory capacity can be further reduced by using the same memory in the second stage as in the first stage.

Maximum value detection section 121 detects the maximum value among the delay profiles for correlation values of L samples stored in memories 119 and 120 corresponding to each synchronization code, identifies the synchronization code corresponding to the delay profile in which the maximum value was detected as a synchronization code matching the synchronization code transmitted from the radio base station, and also detects the timing at which the maximum value was detected as the received synchronization code synchronization timing.

FIG. 5 (C) shows detection of the maximum correlation value at the timing at point Smax of the delay profile of synchronization code 1. That is to say, in a case such as that shown in FIG.5 (C), synchronization code 1 is identified as a synchronization code matching the received synchronization code, and point Smax is detected as the synchronization timing.

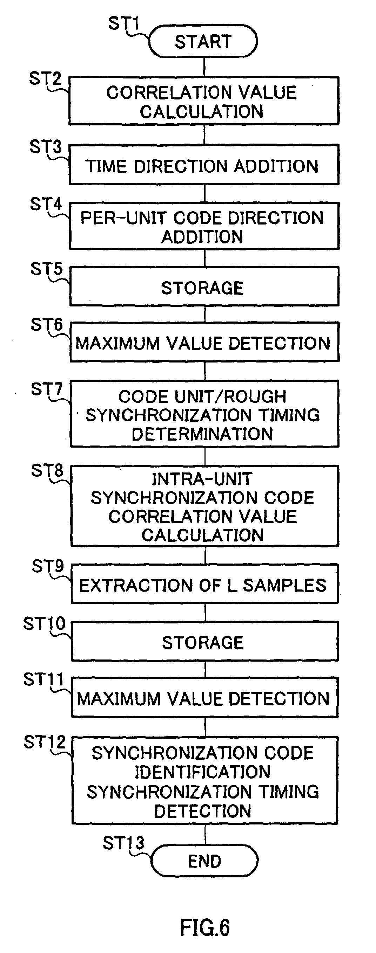

In the above configuration, communication terminal apparatus 100 identifies a synchronization code corresponding to the group of the cell to which it belongs, and also detects the synchronization timing for the received synchronization code, in the order shown in FIG.6.

That is to say, after a cell search is started in step ST1, in following step ST2 correlation values are calculated for X candidate synchronization codes by matched filters 104A through 104X, and then the processing flow proceeds to step ST3. In step ST3, adders 105A through 105X add input Z sample data items in the time direction, L sample data items at a time. As a result, time direction added correlation values of (Z/L) data items are obtained for each candidate synchronization code.

In step ST4, adders 111, ..., 112 add time direction correlation values at each point in time in the code direction for Y time direction added correlation values. In step ST5, rough added correlation values in which the number of sample data is reduced to 1/L in the time direction and to 1/Y in the code direction are stored in memories 118 through 120.

Next, in step ST6, maximum value detection section 121 detects the maximum value of the added correlation values added in the time direction and the code direction, stored in memories 118 through 120. In step ST7, the code unit in which the maximum value was detected by maximum value detection section 121, and rough synchronization timing, are determined.

In step ST8, correlation values are again calculated by matched filters 104(X-1) and 104X for Y candidate synchronization codes within the code unit in which the maximum value was detected in step ST7. Then in step ST9, correlation values for L samples in the vicinity of the rough synchronization timing obtained in step ST7 are extracted from correlation value data for Z samples, for each of the Y candidate synchronization codes for which correlation values have been calculated, and these are then stored in memories 118 through 120 in step ST10.

In step ST11, maximum value detection section 121 detects the maximum value among the delay profiles for correlation values of L samples stored in memories 118 through 120 corresponding to each synchronization code. In following step ST12, the synchronization code corresponding to the delay profile in which the maximum value was detected is identified as a synchronization code matching the received synchronization code, and the timing at which the maximum value was detected is detected as the received synchronization code synchronization timing. Then in step ST13, the synchronization code identification and synchronization timing detection processing is terminated.

In this way, in a communication terminal apparatus 100 according to this embodiment, as first-stage processing synchronization codes corresponding to a received synchronization code are narrowed down from among candidate synchronization codes, and rough received synchronization code synchronization timing is detected, by detecting the maximum value of added correlation values in which correlation values between a received signal and a plurality of candidate synchronization codes are added in the time direction and the code direction. Then, as second-stage processing, a synchronization code that matches the received synchronization code is identified from among the narrowed-down synchronization codes, and detailed synchronization timing for the received synchronization code is detected, by detecting the maximum value of detailed correlation values between the received signal and the above-mentioned narrowed-down candidate synchronization codes.

Thus, according to the above configuration, it is possible to implement a communication terminal apparatus 100 that enables a great reduction in the memory capacity required for detecting the maximum value of correlation values when synchronization code identification and synchronization timing detection are carried out simultaneously during a cell search. As a result, a very marked effect is obtained in a case where there are a large number of chips between one synchronization code and the next synchronization code (that is, in one frame), as in the case of the SCDMA method.

In addition, the amount of processing for maximum correlation value detection can be reduced. As a result, current dissipation is reduced, making it possible to implement a communication terminal apparatus 100 that enables call time and standby time to be extended.

### (Embodiment 2)

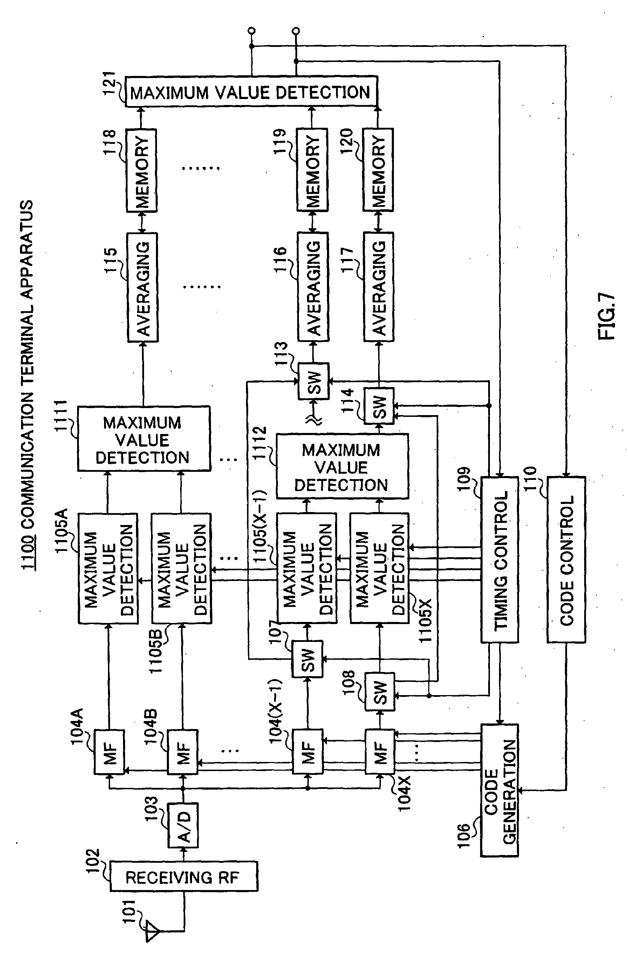

FIG.7 shows a communication terminal apparatus according to Embodiment 2 of the present invention. Parts in FIG.7 identical to those in FIG.4 are assigned the same codes as in FIG.4 and their detailed explanations are omitted. Communication terminal apparatus 1100 has a similar configuration to that of communication terminal apparatus 100 described in Embodiment 1, except that maximum value detection sections 1105A through 1105X are provided instead of adders 105A through 105X, and maximum value detection sections 1111, ..., 1112 are provided instead of adders 111, ..., 112.

By this means, in this embodiment, in the detection of rough correlation values, the highest correlation value is detected every predetermined number of sampling data (every L sampling data) by maximum value detection sections 1105A through 1105X, from among correlation values between received signals obtained from matched filters 104A through 104X and a plurality of candidate synchronization codes. Also, maximum correlation values for Y codes at a time are detected by maximum value detection sections 1111, ..., 1112 from among the maximum correlation values obtained by means of maximum value detection sections 1105A through 1105X.

As a result, rough time direction correlation values are obtained by means of maximum value detection sections 1105A through 1105X, and furthermore rough code direction correlation values are obtained by means of maximum value detection sections 1111, ..., 1112.

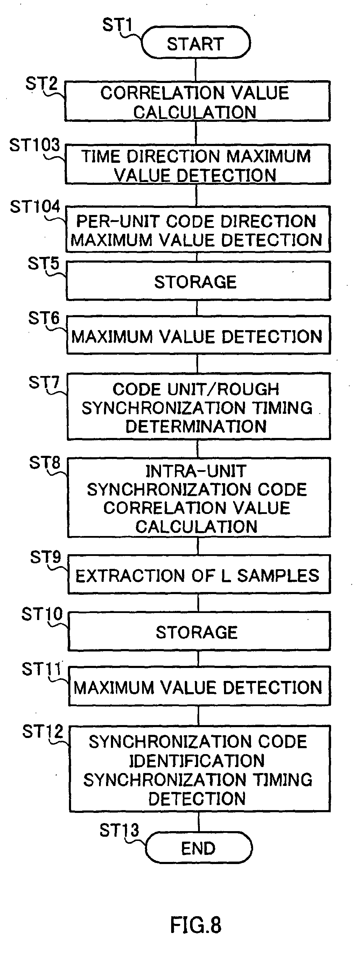

In the above configuration, communication terminal apparatus 1100 identifies a synchronization code corresponding to the group of the cell to which it belongs, and also detects the synchronization timing for the received synchronization code, in the order shown in FIG. 8. In FIG. 8, in which processing steps corresponding to those in FIG.6 are assigned the same codes as in FIG.6, communication terminal apparatus 1100 detects the time direction maximum value for each code by means of maximum value detection sections 1105A through 1105X in step ST103, and in step ST104 detects the code direction maximum value for each unit by means of maximum value detection sections 1111, ..., 1112. Other processing is the same as the processing described in FIG.6.

Actually, to give a description with reference to FIG.5, whereas communication terminal apparatus 100 obtains rough correlation values by integrating matched filter 104A through 104X correlation values for L samples and Y codes, and stores these in memories 118 through 120, in communication terminal apparatus 1100 according to this embodiment, maximum correlation values for L samples and Y codes from among matched filter 104A through 104X correlation values are stored in memories 118 through 120.

According to the above configuration, by detecting a maximum correlation value every predetermined number of sampling data, and also detecting and storing a maximum correlation value for Y codes at a time, a communication terminal apparatus 1100 can be implemented that enables the same kind of effect to be obtained as in Embodiment 1.

### (Embodiment 3)

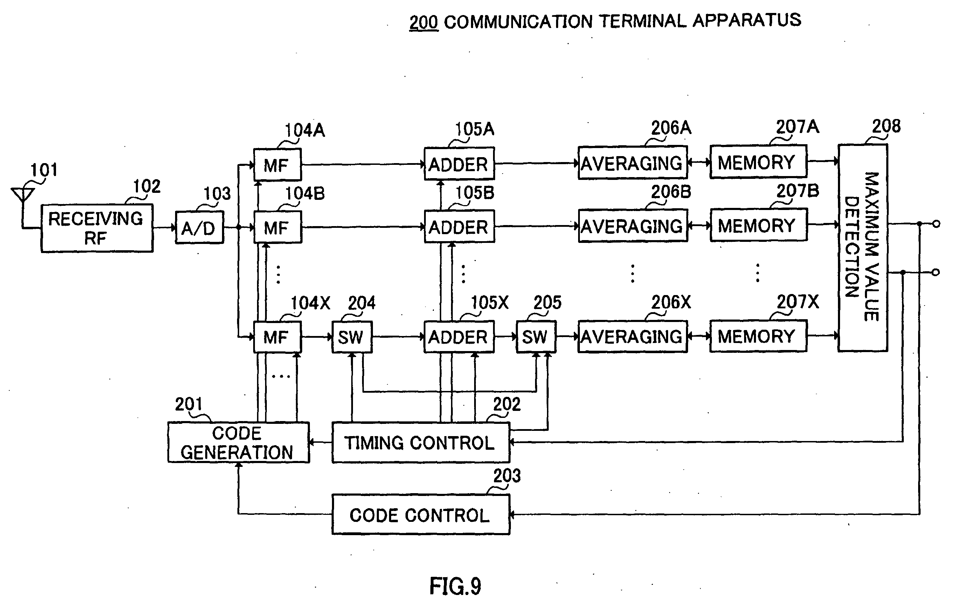

In FIG.9, in which parts corresponding to those in FIG.4 are assigned the same codes as in FIG.4, reference numeral 200 denotes a communication terminal apparatus according to Embodiment 3 of the present invention. The difference between communication terminal apparatus 200 of this embodiment and communication terminal apparatus 100 of Embodiment 1 is that communication terminal apparatus 200 does not perform code direction addition in the first-stage processing.

Therefore, communication terminal apparatus 200 of this embodiment performs synchronization code identification in the first-stage processing, and detects precise synchronization timing in the second-stage processing.

Communication terminal apparatus 200 has a number of matched filters 104A through 104X corresponding to the number of candidate synchronization codes (X). Each of matched filters 104A through 104X calculates the correlation between a received baseband signal and a candidate synchronization code input from a code generation section 201. Of these, the correlation values obtained by means of 1st through (X-1)'th matched filters 104A, 104B, ... are input to corresponding adders 105A, 105B, ... . The correlation value obtained by means of X'th matched filter 104X is sent to adder 105X, or to a switch 205, via a switch 204.

Adders 105A through 105X calculate time direction added correlation values by adding in the time direction, for every predetermined number L of sampling data, correlation values input from corresponding matched filters 104A through 104X. These time direction added correlation values are then sent to averaging sections 206A through 206X. Switch 204 is controlled by a timing control section 202, and in the first-stage processing sends an input correlation value to adder 105X. In the first-stage processing, switch 205 outputs all added correlation value data to averaging section 206X.

Averaging sections 206A through 206X average added correlation values for a plurality of frames. Then time direction added correlation values for candidate synchronization codes averaged over a plurality of frames are stored in corresponding memories 207A through 207X.

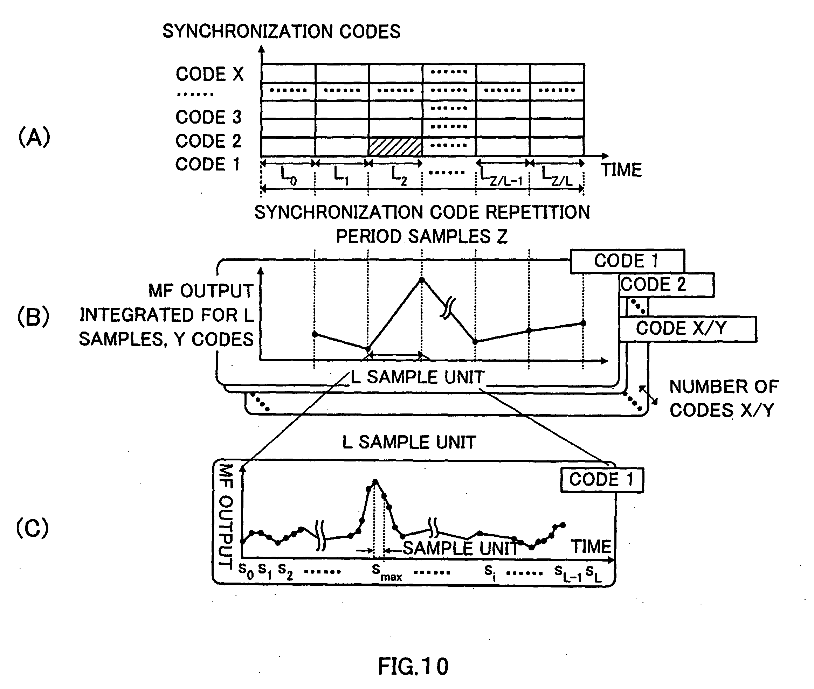

Thus, if the number of correlation value samples for one frame obtained by matched filters 104A through 104X is designated Z, then, as shown in FIG.10 (A), the number of added correlation values added in the time direction that are stored in memories 207A through 207X is [number of candidate synchronization codes (X) × number of samples ((Z/L)+1)]. Therefore, the number of data stored in memories 207A through 207X is approximately 1/L, as compared with the case where correlation values are stored directly into memories 207A through 207X from matched filters 104A through 104X. As a result, the required memory capacity can be reduced.

A maximum value detection section 208 finds the highest added correlation value among the time direction added correlation values stored in memories 207A through 207X. The synchronization code for which the maximum added correlation value was obtained is identified as a synchronization code matching the received synchronization code, and information on this synchronization code is sent to a code control section 203. Also, information on the timing at which the maximum added correlation value was obtained is sent to timing control section 202.

Communication terminal apparatus 200 then proceeds to detailed synchronization timing detection processing for the identified synchronization code as second-stage processing.

Code control section 203 instructs code generation section 201 to generate only the identified synchronization code, and code generation section 201 sends that synchronization code to matched filter 104X. Matched filter 104X to which the synchronization code is sent calculates the correlation value between the received signal and synchronization code, and sends this to switch 204. Switch 204 is controlledby timing control section 202, and in the second-stage processing, sends the input correlation value directly to switch 205 without passing via adder 105X.

By this means, correlation value data for Z samples are input to switch 205 for the identified synchronization code. Switch 205 is controlled by timing control section 202, and outputs only correlation values of L samples in the vicinity of the rough synchronization timing obtained in the first-stage processing.

As a result, as shown in FIG. 10 (B) and (C), detailed correlation values of L samples in the vicinity of the rough synchronization timing are output for the identified synchronization code (in FIG.10 (B), synchronization code 1 is shown as the identified synchronization code). The detailed correlation values of L samples output from switch 205 are passed to averaging section 206X, where an average value is calculated for a plurality of frames, after which the value is stored in memory 207X.

Thus, in communication terminal apparatus 200, the overall memory capacity required can be greatly reduced by switching switches 204 and 205 as appropriate between first-stage processing and second-stage processing, so that memories 207A through 207X used in the first-stage processing are also used in the second-stage processing.

That is to say, by dividing synchronization code identification and synchronization timing detection processing into two processing stages, the memory capacity required in the first stage is reduced, andmemory capacity can be further reduced by using the same memory in the second stage as in the first stage.

Maximum value detection section 208 detects the maximum value among the delay profiles for correlation values of L samples stored in memory 207X, and detects the timing at which the maximum value was detected as the received synchronization code synchronization timing. FIG.10 (C) shows detection of the maximum correlation value at the timing at point Smax of the delay profile of synchronization code 1.

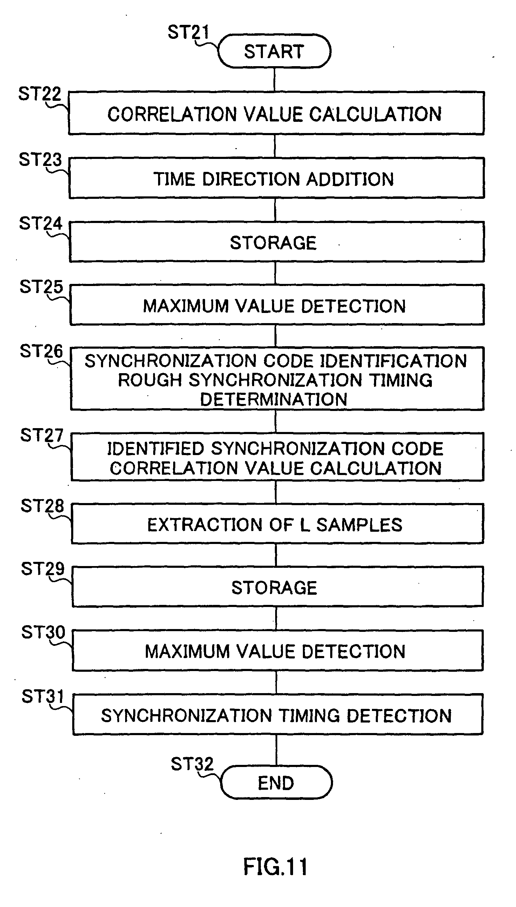

In the above configuration, communication terminal apparatus 200 identifies a synchronization code corresponding to the group of the cell to which it belongs, and also detects the synchronization timing for the received synchronization code, in the order shown in FIG.11.

That is to say, after a cell search is started in step ST21, in following step ST22 correlation values are calculated for X candidate synchronization codes by matched filters 104A through 104X, and then the processing flow proceeds to step ST23. In step ST23, adders 105A through 105X add input Z sample data items in the time direction, L sample data items at a time. As a result, time direction added correlation values of (Z/L) data items are obtained for each candidate synchronization code, and in following step ST24 these time direction added correlation values for each candidate synchronization code are stored in memories 207A through 207X.

Next, in step ST25, maximum value detection section 208 detects the maximum value of the time direction added correlation values stored in memories 207A through 207X. In step ST26, the synchronization code for which the maximum value was detected by maximum value detection section 208 is identified as a synchronization code of the group of the cell to which this communication terminal apparatus belongs, and rough synchronization timing is detected.

In step ST27, a correlation value is again calculated by matched filter 104X for the synchronization code identified in step ST26. Then in step ST28, correlation values for L samples in the vicinity of the rough synchronization timing obtained in step ST26 are extracted from correlation value data for Z samples for the identified synchronization code, and these are then stored in memory 207X in step ST29.

In step ST30, maximum value detection section 208 detects the maximum value among the delay profiles for correlation values of L samples stored in memory 207X. In following step ST31, the timing at which the maximum value was detected is detected as the received synchronization code synchronization timing. Then in step ST32, the synchronization code identification and synchronization timing detection processing is terminated.

In this way, in a communication terminal apparatus 200 according to this embodiment, as first-stage processing the synchronization code among candidate synchronization codes that matches a received synchronization code is identified, and rough received synchronization code synchronization timing is detected, by detecting the maximum value of added correlation values in which correlation values between a received signal and a plurality of candidate synchronization codes are added in the time direction. Then, as second-stage processing, detailed synchronization timing for the received synchronization code is detected, by detecting the maximum value of detailed correlation values between the received signal and the identified synchronization code.

Thus, according to the above configuration, it is possible to implement a communication terminal apparatus 200 that enables a great reduction in the memory capacity required for detecting the maximum value of correlation values when synchronization code identification and synchronization timing detection are carried out simultaneously during a cell search.

In addition, the amount of processing for maximum correlation value detection can be reduced. As a result, current dissipation is reduced, making it possible to implement a communication terminal apparatus 200 that enables call time and standby time to be extended.

### (Embodiment 4)

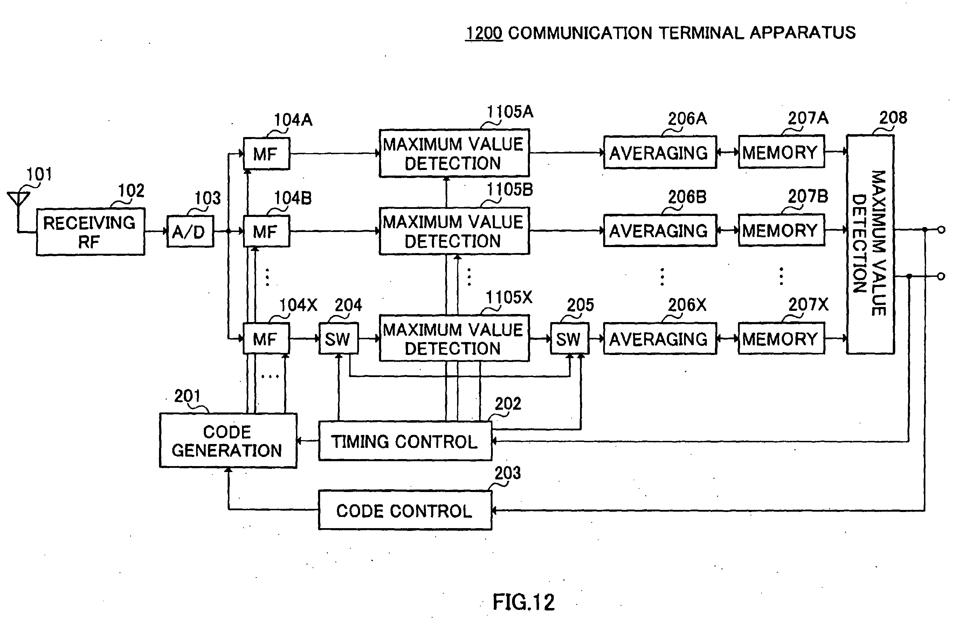

In FIG.12, in which parts corresponding to those in FIG.9 are assigned the same codes as in FIG.9, reference numeral 1200 denotes a communication terminal apparatus according to Embodiment 4 of the present invention. The difference between communication terminal apparatus 1200 of this embodiment and communication terminal apparatus 200 of Embodiment 3 is that, whereas communication terminal apparatus 200 obtains rough correlation values by adding (integrating) matched filter 104A through 104X correlation values for L samples at a time, and stores these in memories 118, ..., 120, communication terminal apparatus 1200 of this embodiment detects maximum correlation values among L samples from among matched filter 104A through 104X correlation values by means of maximum value detection sections 1105A through 1105X, and stores these in memories 118, ..., 120.

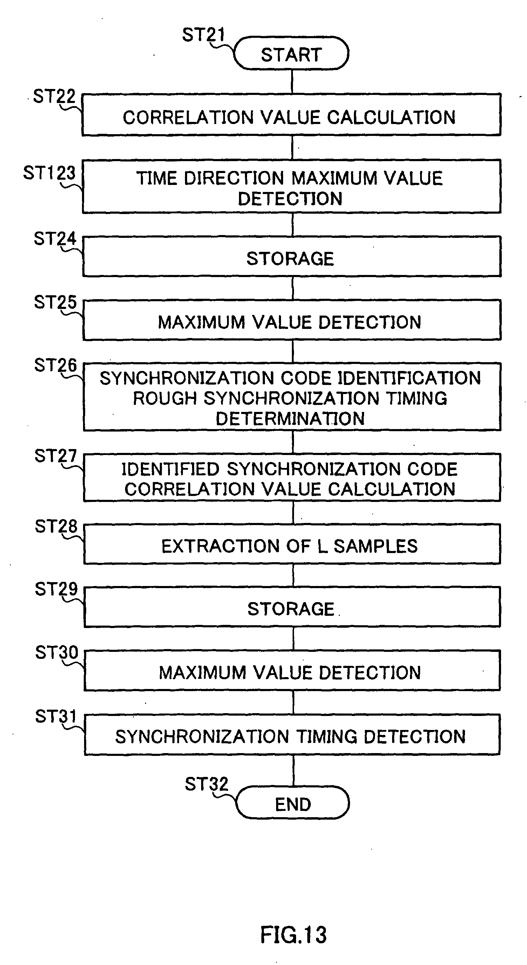

In the above configuration, communication terminal apparatus 1200 identifies a synchronization code corresponding to the group of the cell to which it belongs, and also detects the synchronization timing for the received synchronization code, in the order shown in FIG.13. In FIG.13, in which processing steps corresponding to those in FIG.11 are assigned the same codes as in FIG. 11, communication terminal apparatus 1200 detects the time direction maximum value for each code by means of maximum value detection sections 1105A through 1105X in step ST123. Other processing is the same as the processing described in FIG.11.

According to the above configuration, by detecting and storing a maximum correlation value every predetermined number of sampling data, and thereafter performing the same processing as in Embodiment 3, a communication terminal apparatus 1200 can be implemented that enables the same kind of effect to be obtained as in Embodiment 3.

### (Embodiment 5)

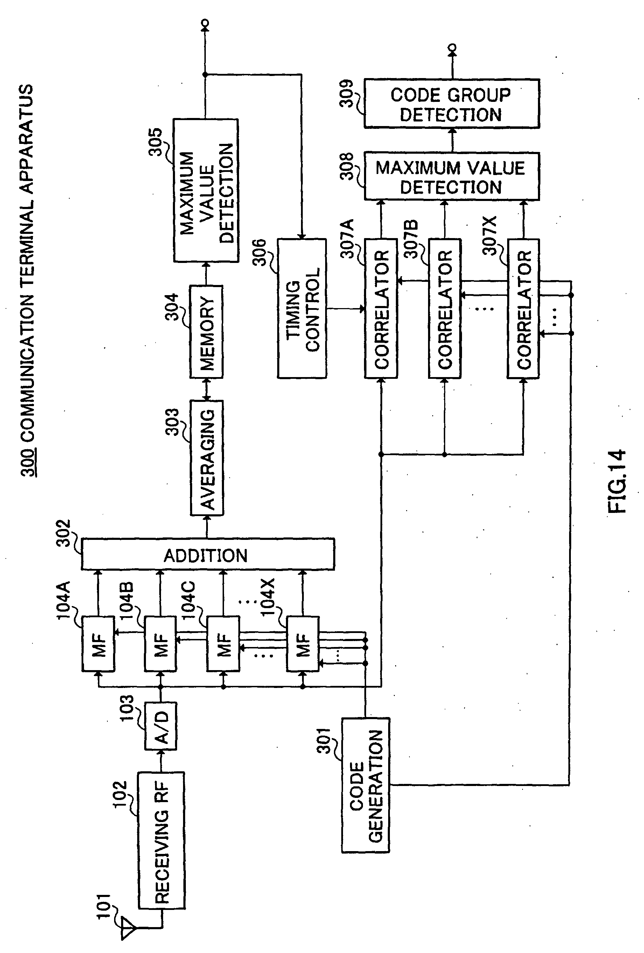

FIG.14 shows a communication terminal apparatus according to Embodiment 5 of the present invention, with reference numeral 300 designating the overall apparatus. As first-stage processing, communication terminal apparatus 300 of this embodiment does not perform synchronization code identification processing, but performs high-precision synchronization timing detection processing for a received synchronization code, and as second-stage processing, communication terminal apparatus 300 identifies the synchronization code using the synchronization timing detected in the first-stage processing.

Communication terminal apparatus 300 converts a received signal received by an antenna 101 to a baseband signal by means of down-conversion performed by a radio receiving section (receiving RF) 102. The baseband signal is converted to a digital signal by an analog-digital conversion section (A/D) 103, and sent to matched filters (MF) 104A through 104X.

Each of matched filters 104A through 104X calculates the correlation between a received baseband signal and a candidate synchronization code input from a code generation section 301. The correlation values obtained by means of matched filters 104A through 104X are input to an adder 302.

Adder 302 adds correlation values at each point in time in the code direction for X correlation values found for a candidate synchronization code. That is to say, for each point in time, X correlation values are added and one code direction added correlation value is obtained. The code direction added correlation value obtained by means of adder 302 is sent to an averaging section 303. Averaging section 303 averages code direction added correlation values for a plurality of frames. By this means, a code direction added correlation value for which the effect of fading, etc., has been reduced is stored in memory 304.

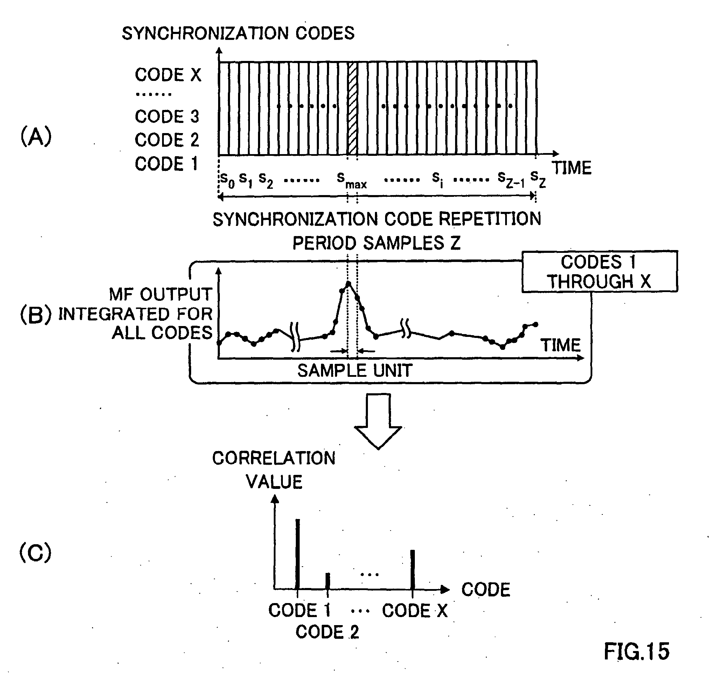

Thus, if the number of correlation value samples for one frame obtained by means of matched filters 104A through 104X is designated Z, then, as shown in FIG.15 (A) , the data stored in memory 304 is Z (=numberof samples) code direction added correlation values. Therefore, the number of data stored in memory 304 is approximately 1/X, as compared with the case where correlation values are stored directly into memory 304 from matched filters 104A through 104X. As a result, the required memory capacity can be greatly reduced.

Maximum value detection section 305 finds the highest added correlation value among the code direction added correlation values stored in memory 304. Specifically, maximum value detection section 305 detects the timing at which the maximum added correlation value is obtained from a delay profile such as that shown in FIG.15 (B). Here, this timing is found based on a delay profile obtained by adding correlation values for all candidate synchronization codes in the code direction, and the amount of correlation value information is not reduced for the time direction, so that this timing is precisely synchronized with respect to the received synchronization code.

Maximum value detection section 305 sends detected timing information to an output pin, and also to a timing control section 306. Timing control section 306 controls the correlation timing of correlators 307A through 307X so as to match the timing information.

The number of correlators 307A through 307X provided is the same as the number of candidate synchronization codes (X). Correlators 307A through 307X receive as input the received signal output from analog-digital conversion section 103, and also a candidate synchronization code generated by code generation section 301.

Correlators 307A through 307X find the correlation value between the received signal and a candidate synchronization code at the timing specified by timing control section 306. FIG.15 (C) shows an example of correlation value output from correlators 307A through 307X. A maximum value detection section 308 detects the highest correlation value from the correlation value output of correlators 307A through 307X (in the example in FIG. 15 (C), synchronization code 1 is detected). As correlators 307A through 307X calculate correlation values at only one timing, memory is not required between correlators 307A through 307X and maximum value detection section 308.

The synchronization code input to correlators 307A through 307X for which the maximum value was obtained is then reported to a code group detection section 309. Code group detection section 309 detects the reported synchronization code as a code group, and sends this to the output pin.

Thus, considering the fact that the correlation timing of correlators 307A through 307X is synchronized with the received synchronization code, the candidate synchronization code input to correlators 307A through 307X for which the highest correlation output is obtained can be said to be a synchronization code that matches the received synchronization code, and therefore this synchronization code is identified as the received synchronization code.

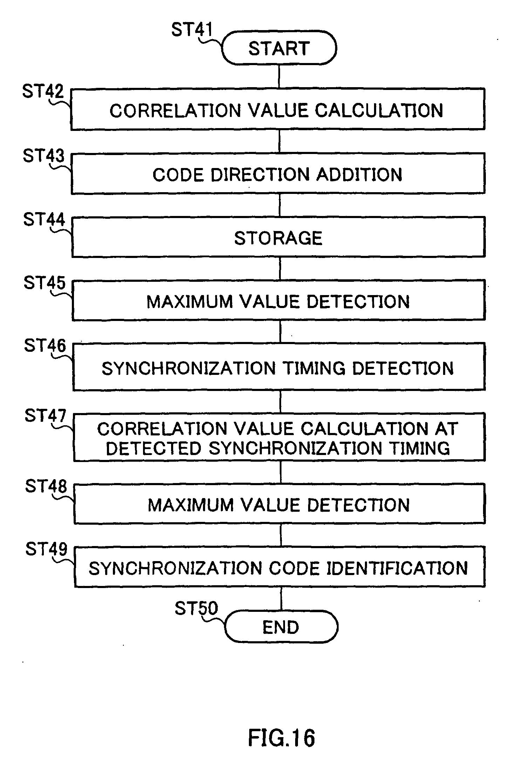

In the above configuration, communication terminal apparatus 300 identifies a synchronization code of the group of the cell to which it belongs, and also detects the synchronization timing for the received synchronization code, in the order shown in FIG.16.

That is to say, after a cell search is started in step ST41, in following step ST42 correlation values are calculated for X candidate synchronization codes by matched filters 104A through 104X, and then the processing flow proceeds to step ST43. In step ST43, adder 302 adds correlation values at each point in time in the code direction for X correlation values found for each candidate synchronization code, and in following step ST44 this code direction added correlation value for each point in time is stored in memory 304.

In step ST45, maximum value detection section 305 detects the maximum value of the code direction added correlation values stored in memory 304. In step ST46, the point in time at which maximum value detection section 305 detected the maximum value is detected as the received synchronization code synchronization timing.

In step ST47 correlators 307A through 307X find correlation values between the received signal and a candidate synchronization code at the detected synchronization timing, in step ST48 maximum value detection section 308 detects the highest correlation value from the correlation output of correlators 307A through 307X, and in step ST49 the synchronization code input to correlators 307A through 307X for which the maximum value was detected is identified as a synchronization code matching the received synchronization code. Then in step ST50, communication terminal apparatus 300 terminates the synchronization code identification and synchronization timing detection processing.

In this way, in a communication terminal apparatus 300 according to this embodiment, as first-stage processing precise received synchronization code synchronization timing is detected by detecting the maximum value of added correlation values in which correlation values between a received signal and a plurality of candidate synchronization codes are added in the code direction. Then, as second-stage processing, the synchronization code is identified by finding correlation values between the received signal and each candidate synchronization code at the detected synchronization timing, and detecting the highest correlation value.

Thus, according to the above configuration, it is possible to implement a communication terminal apparatus 300 that enables a great reduction in the memory capacity required for detecting the maximum value of correlation values when synchronization code identification and synchronization timing detection are carried out simultaneously during a cell search.

Also, as the maximum value of correlation values can be detected in the second stage without using memory, the amount of processing and the processing time required for maximum correlation value detection can be greatly reduced compared with above Embodiments 1 through 4. As a result, current dissipation is reduced, making it possible to implement a communication terminal apparatus 300 that enables call time and standby time to be extended.

### (Embodiment 6)

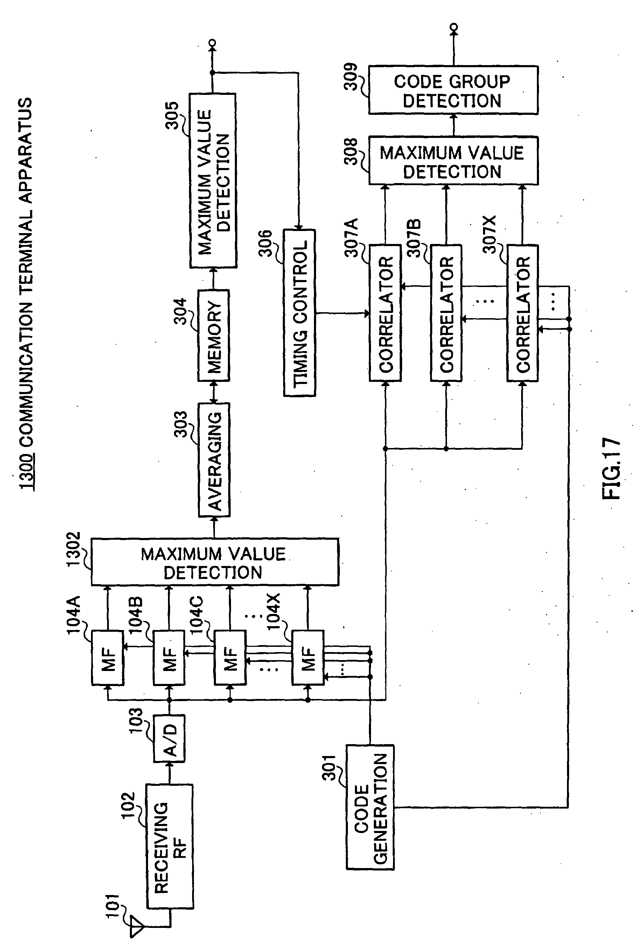

FIG.17, in which parts corresponding to those in FIG.14 are assigned the same codes as in FIG.14, shows a communication terminal apparatus 1300 according to Embodiment 6 of the present invention. The difference between communication terminal apparatus 1300 of this embodiment and communication terminal apparatus 300 of Embodiment 5 is that, whereas communication terminal apparatus 300 performs addition (integration) of matched filter 104A through 104X correlation values for all codes at each point in time by means of adder 302, communication terminal apparatus 1300 of this embodiment detects maximum correlation values at each point in time from among the correlation values of all codes by means of a maximum value detection section 1302.

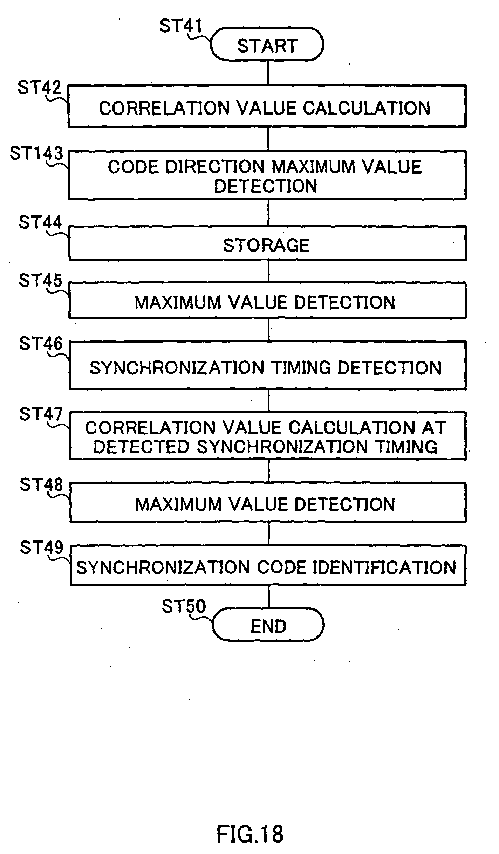

In the above configuration, communication terminal apparatus 1300 identifies a synchronization code corresponding to the group of the cell to which it belongs, and also detects the synchronization timing for the received synchronization code, in the order shown in FIG.18. In FIG.18, in which processing steps corresponding to those in FIG.16 are assigned the same codes as in FIG.16, in step ST143 communication terminal apparatus 1300 detects the code direction maximum value by detecting maximum correlation values at each point in time from among the correlation values of all codes by means of maximum value detection section 1302. Other processing is the same as the processing described in FIG.16.

According to the above configuration, a communication terminal apparatus 1300 can be implemented that enables the same kind of effect to be obtained as in Embodiment 5.

### (Embodiment 7)

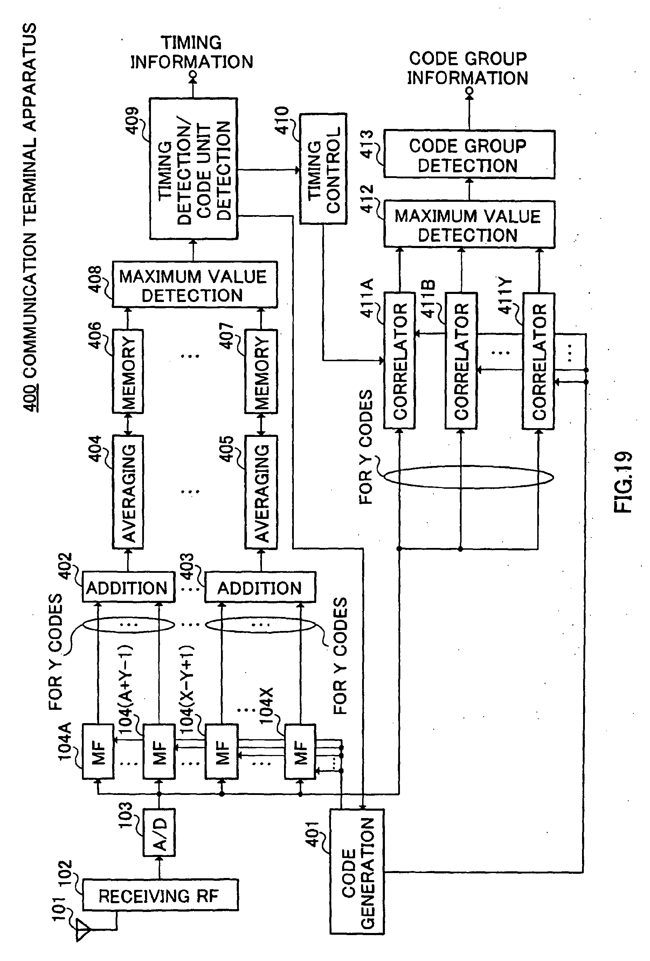

FIG.19, in which parts corresponding to those in FIG.14 are assigned the same codes as in FIG.14, shows a communication terminal apparatus according to Embodiment 7 of the present invention, with reference numeral 400 designating the overall apparatus. In communication terminal apparatus 400, correlation values output from matched filters 104A through 104X are input, Y values at a time, to adders 402, ..., 403. For example, if the number of candidate synchronization codes X is 32 and Y is 8, four adders 402, ..., 403 are provided, and eight correlation values are input to each of adders 402, ..., 403.

For the Y input correlation values, adders 402, ..., 403 add the correlation values at each point in time in the code direction. That is to say, for each point in time, Y correlation values are added and a code direction added correlation value is obtained. The code direction added correlation values obtained by adders 402, ..., 403 are stored in corresponding memories 406, ..., 407 via corresponding averaging sections 404, ..., 405.

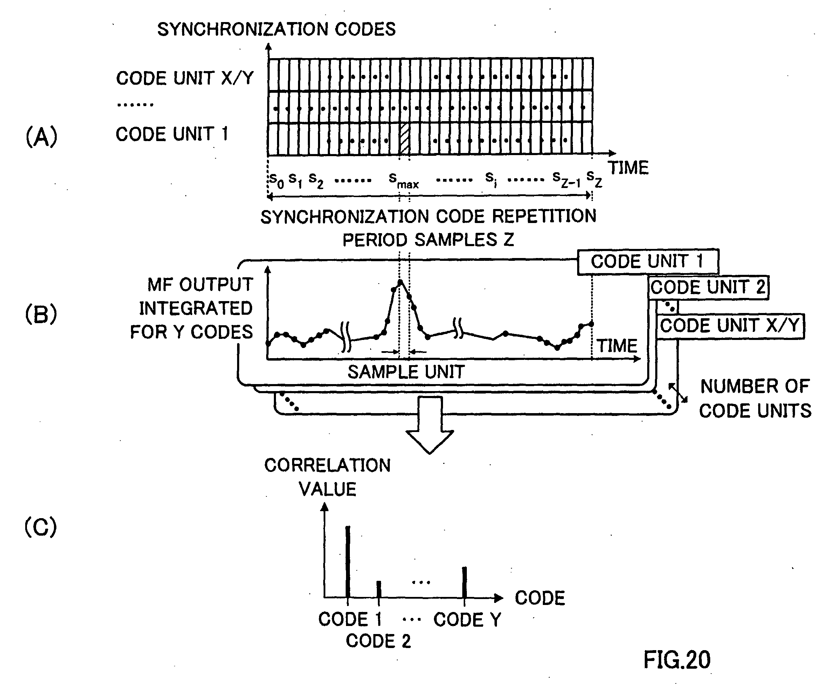

Thus, if the number of correlation value samples for one frame obtained by means of matched filters 104A through 104X is designated Z, then, as shown in FIG.20 (A), the number of data stored in memories 406, ..., 407 is Z×(X/Y). Therefore, the number of data stored in memories 406, ..., 407 is approximately 1/Y, as compared with the case where correlation values are stored directly into memories 406, ..., 407 from matched filters 104A through 104X. As a result, the required memory capacity can be reduced.

A maximum value detection section 408 finds the highest added correlation value among the per-unit code direction added correlation values stored in memories 406, ..., 407. Specifically, the maximum value is detected from a delay profile such as that shown in FIG.20 (B). A timing detection/code unit detection section 409 detects the timing and code unit in which the maximum value was detected.

That is to say, the timing and code unit in which the maximum correlation value is obtained are detected from a delay profile such as that shown in FIG.20 (B). Here, this timing is found based on a delay profile obtained by adding candidate synchronization code correlation values in the code direction, and the amount of correlation value information is not reduced for the time direction, so that this timing is precisely synchronized with respect to the received synchronization code.

Timing detection/code unit detection section 409 sends detected timing information to an output pin, and also to a timing control section 410. Timing detection/code unit detection section 409 also reports the code unit in which the maximum value was obtained to a code generation section 401.

Timing control section 410 controls the correlation timing of correlators 411A through 411Y so as to match the timing information. Code generation section 401 generates Y candidate synchronization codes within the reported code unit, and sends these to correlators 411A through 411Y. That is to say, in the case of this embodiment, Y correlators 411A through 411Y are provided.

Correlators 411A through 411Y receive as input the received signal output from analog-digital conversion section 103, and also a candidate synchronization code generated by code generation section 401. Correlators 411A through 411Y find the correlation value between the received signal and a candidate synchronization code at the timing specified by timing control section 410. FIG.20 (C) shows an example of correlation value output from correlators 411A through 411Y. A maximum value detection section 412 detects the highest correlation value from the Y correlation values output from correlators 411A through 411Y (in the example in FIG.20 (C), synchronization code 1 is detected). As correlators 411A through 411Y calculate correlation values at only one timing, memory is not required between correlators 411A through 411Y and maximum value detection section 412.

The synchronization code input to correlators 411A through 411Y for which the maximum value was obtained is then reported to a code group detection section 413. Code group detection section 413 detects the reported synchronization code as a code group, and sends this to the output pin.

Thus, considering the fact that the correlation timing of correlators 307A through 307X is synchronized with the received synchronization code, the candidate synchronization code input to correlators 307A through 307X for which the highest correlation output is obtained can be said to be a synchronization code that matches the received synchronization code, and therefore this synchronization code is identified as the received synchronization code.

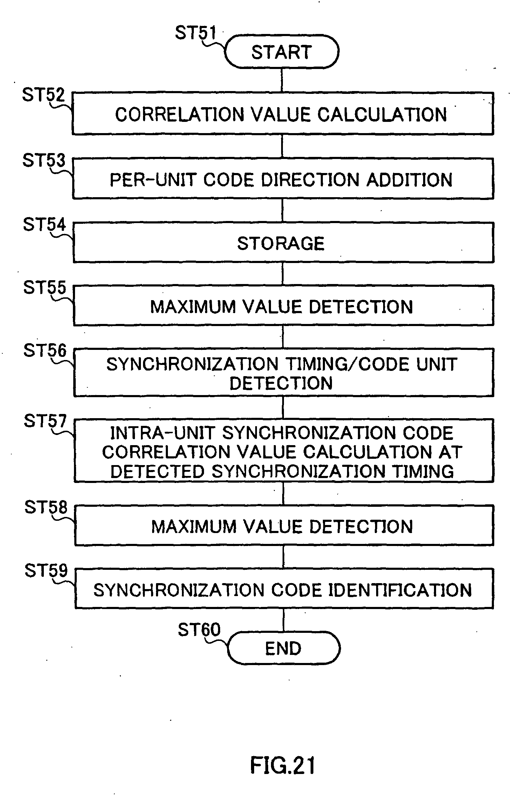

In the above configuration, communication terminal apparatus 400 identifies a synchronization code of the group of the cell to which it belongs, and also detects the synchronization timing for the received synchronization code, in the order shown in FIG.21.

That is to say, after a cell search is started in step ST51, in following step ST52 correlation values are calculated for X candidate synchronization codes by matched filters 10 4A through 104X, and then the processing flow proceeds to step ST53. In step ST53, adders 402, ..., 403 find the code direction added correlation value on an individual code unit basis. Then in step ST54, the code direction added correlation values of each point in time and each code unit are stored in memories 406, ..., 407.

In step ST55, maximum value detection section 408 detects the maximum value of per-unit code direction added correlation values stored in memories 406, ..., 407. In step ST56, timing detection/code unit detection section 409 detects the point in time at which the maximum value was detected as the received synchronization code synchronization timing, and also detects the code unit in which the maximum value was detected. By this means, the synchronization codes subject to identification are narrowed down from X candidate synchronization codes to Y synchronization codes within the detected code unit.

In step ST57 correlators 411A through 411Y find correlation values between the received signal and Y synchronization codes within a unit at the detected synchronization timing, in step ST58 maximum value detection section 412 detects the highest correlation value from the correlation output of correlators 411A through 411Y, and in step ST59 the synchronization code input to correlators 411A through 411Y for which the maximum value was detected is identified as a synchronization code matching the received synchronization code. Then in step ST60, communication terminal apparatus 400 terminates the synchronization code identification and synchronization timing detection processing.

In this way, in a communication terminal apparatus 400 according to this embodiment, as first-stage processing precise received synchronization code synchronization timing is detected, and synchronization codes subject to identification are narrowed down to synchronization codes within a unit, by finding correlation values between a received signal and a plurality of candidate synchronization codes, dividing those correlation values into a plurality of units, and detecting the maximum value of code direction added correlation values within each unit. Then, as second-stage processing, the synchronization code is identified by finding correlation values between the received signal and synchronization codes within the unit at the detected synchronization timing, and detecting the highest correlation value.

Thus, according to the above configuration, it is possible to implement a communication terminal apparatus 400 that enables a great reduction in the memory capacity required for detecting the maximum value of correlation values when synchronization code identification and synchronization timing detection are carried out simultaneously during a cell search.

In addition, the amount of processing for maximum correlation value detection can be reduced. As a result, current dissipation is reduced, making it possible to implement a communication terminal apparatus 400 that enables call time and standby time to be extended.

Moreover, by not adding correlation values for all synchronization codes as in Embodiment 5, but adding correlation values for Y codes at a time and detecting the maximum value of the addition results, significantly more precise synchronization timing can be obtained than in the case where timing is detected from a delay profile in which all candidate synchronization codes are added, as in Embodiment 5.

### (Embodiment 8)

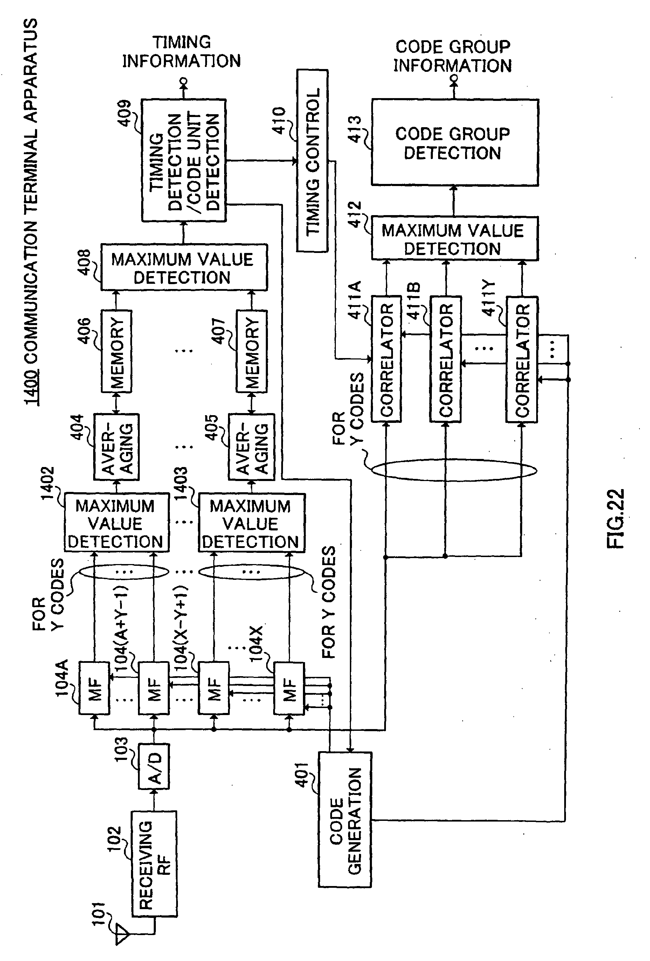

FIG.22, in which parts corresponding to those in FIG.19 are assigned the same codes as in FIG.19, shows a communication terminal apparatus 1400 according to Embodiment 8 of the present invention. The difference between communication terminal apparatus 1400 of this embodiment and communication terminal apparatus 400 of Embodiment 7 is that, whereas in communication terminal apparatus 400 matched filter 104A through 104X correlation values are input to adders 402, ..., 403 for Y codes at a time, in communication terminal apparatus 1400 of this embodiment matched filter 104A through 104X correlation values are input to maximum value detection sections 1402, ..., 1403 for Y codes at a time. Otherwise, the configuration is the same as that of communication terminal apparatus 400.

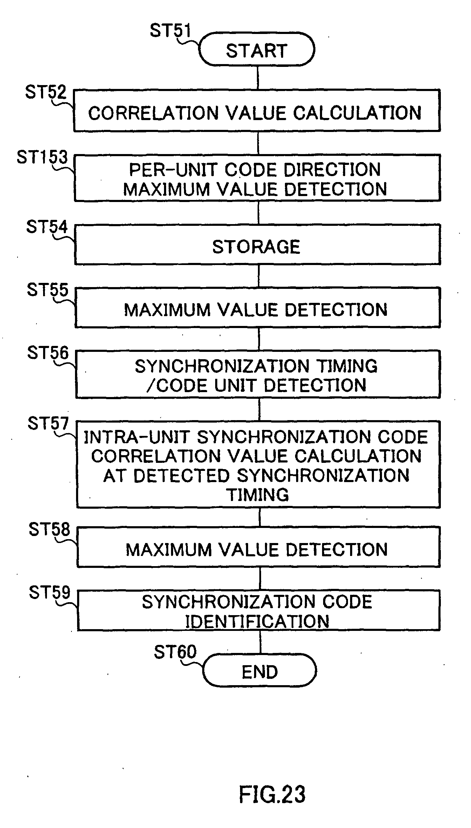

In the above configuration, communication terminal apparatus 1400 identifies a synchronization code corresponding to the group of the cell to which it belongs, and also detects the synchronization timing for the received synchronization code, in the order shown in FIG.23. In FIG.23, in which processing steps corresponding to those in FIG.21 are assigned the same codes as in FIG.21, in step ST153 communication terminal apparatus 1400 detects the maximum value for each point in time from among correlation values for Y codes at a time by means of maximum value detection sections 1402, ..., 1403. Other processing is the same as the processing described in FIG.21.

According to the above configuration, a communication terminal apparatus 1400 can be implemented that enables the same kind of effect to be obtained as in Embodiment 7.

### (Other embodiments)

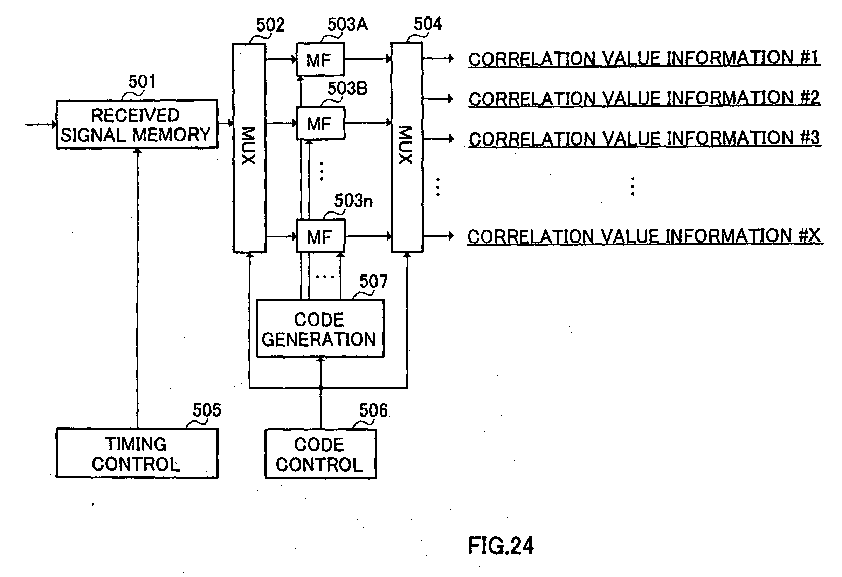

In the above-described embodiments, a case has been described in which a number of matched filters 104A through 104X corresponding to the number of candidate synchronization codes are provided to perform synchronization code correlation computation, but the present invention is not limited to this, and by using the configuration shown in FIG.24, for example, it is possible to find correlation values equivalent to the number of candidate synchronization codes (X) with a number of matched filters (n) smaller than the number of candidate synchronization codes (X), and to achieve a communication terminal apparatus with a much simpler configuration.

That is to say, received signal memory 501 is connected as a latter-stage section to analog-digital conversion section 103 in FIG.4. Received signals for a plurality of frames are stored in received signal memory 501, and at timing controlled by a timing control section 505, received signals are output sequentially to matched filters 503A through 503n via a multiplexer (MUX) 502.

Froma code generation section 507, n different kinds of candidate synchronization codes are input to matched filters 503A through 503n, respectively. The correlation values for the respective synchronization codes, obtained by means of matched filters 503A through 503n, are output via a multiplexer (MUX) 504. Thus, when X = 32 and n = 8, eight different candidate synchronization codes are sent each time from code generation section 507 to matched filters 503A through 503n, and correlation values can be obtained for 32 candidate synchronization codes by repeating the processing four times.

By enabling the number of matched filters to be greatly reduced in this way, it is possible to achieve a communication terminal apparatus with a much simpler configuration.

Also, in the above-described embodiments, a case has been described in which a cell search method according to the present invention is used when a communication terminal apparatus identifies the code group of the cell to which it belongs, but the present invention is not limited to this, and essentially, a cell search method according to the present invention can be widely applied to cases where received synchronization code identification and received synchronization code synchronization timing detection are carried out simultaneously.

The present invention is not limited to the above-described embodiments, and various variations and modifications may be possible without departing from the scope of the present invention.

A cell search method according to the present invention has a first step of finding correlation values between a received signal containing a synchronization code corresponding to the group of the cell to which a communication terminal apparatus belongs and a plurality of candidate synchronization codes, finding rough correlation values from those correlation values and storing them in memory, and detecting the maximum value of the stored rough correlation values, whereby synchronization codes corresponding to the received synchronization code are narrowed down from the candidate synchronization codes to some thereof, and also rough received synchronization code synchronization timing is detected; and a second step of storing correlation values between a received signal and narrowed-down synchronization codes in memory, and detecting the maximum value of the stored correlation values, whereby a synchronization code that matches the received synchronization code is identified from among the narrowed-down synchronization codes, and also detailed received synchronization code synchronization timing is detected.

According to this method, items stored in memory in the first step are rough correlation values, and therefore a small memory capacity is sufficient. Also, maximum value detection processing in the first step need only be performed for rough correlation values (that is, a small quantity of data), and therefore a small amount of processing is sufficient. Moreover, items stored in memory in the second step are only correlation values for narrowed-down synchronization codes, and therefore a small memory capacity is sufficient. Furthermore, maximum value detection processing in the second step applies only to correlation values for narrowed-down synchronization codes, and therefore a small amount of processing is sufficient. As a result, it is possible to perform synchronization code identification and synchronization timing detection with a small required memory capacity and a small amount of processing.

In a cell search method according to the present invention, in the above-described first step, a rough correlation value is obtained by adding correlation values between a received signal and a plurality of candidate synchronization codes in the time direction every predetermined number of sampling data, and/or adding correlation values in the code direction at points in time.

According to this method, it is possible to obtain a rough correlation value by keeping necessary information among held correlation value information. For example, if a rough correlation value is obtained by adding in the time direction every predetermined number of sampling data, candidate synchronization code unit correlations are kept, simplifying synchronization code identification. On the other hand, if a rough correlation value is obtained by adding correlation values at points in time in the code direction, time direction correlations are kept, simplifying synchronization timing detection. And if a rough correlation value is obtained by adding in the time direction and code direction, the number of correlation value data can be greatly decreased, enabling the required memory capacity and amount of maximum value detection processing in the first step to be greatly reduced. Thus, by appropriately selecting the way in which rough correlation values are formed from among the above-described kinds of processing, it is possible to carry out a cell search suited to the hardware environment.

In a cell search method according to the present invention, in the above-described first step, a rough correlation value is obtained by detecting the maximum correlation value from among correlation values between a received signal and a plurality of candidate synchronization codes every predetermined number of sampling data, and/or detecting the maximum correlation value in the code direction from among correlation values at points in time.

According to this method, it is possible to obtain a rough correlation value by keeping necessary information among held correlation value information. For example, if a rough correlation value is obtained by detecting a maximum value in the time direction every predetermined number of sampling data, candidate synchronization code unit correlations are kept, simplifying synchronization code identification. On the other hand, if a rough correlation value is obtained by detecting a maximum value in the code direction from among correlation values at points in time, time direction correlations are kept, simplifying synchronization timing detection. And if a rough correlation value is obtained by detecting a maximum value in the time direction and code direction, the number of correlation value data can be greatly decreased, enabling the required memory capacity and amount of subsequent maximum value detection processing in the first step to be greatly reduced. Thus, by appropriately selecting the way in which rough correlation values are formed from among the above-described kinds of processing, it is possible to carry out a cell search suited to the hardware environment.

In a cell search method according to the present invention, in the above-described second step, correlation values are found between synchronization codes narrowed down in the first step and a received signal, correlation values in the vicinity of the rough synchronization timing detected in the first step are extracted from among those correlation values and stored in memory, and the maximum value of the stored correlation values is detected, whereby a synchronization code that matches the received synchronization code is identified, and also detailed received synchronization code synchronization timing is detected.

According to this method, items stored in memory in the second step are only correlation values in the vicinity of rough synchronization timing for narrowed-down synchronization codes, and therefore the required memory capacity can be made significantly smaller. Also,maximum valuedetection processinginthe second step applies only to correlation values in the vicinity of rough synchronization timing for narrowed-down synchronization codes, and therefore the amount of processing can be significantly reduced.

A cell search method according to the present invention has a first step of finding correlation values between a received signal containing a synchronization code corresponding to the group of the cell to which a communication terminal apparatus belongs and a plurality of candidate synchronization codes, adding those correlation values in the time direction, or detecting the maximum value thereof, every predetermined number of sampling data and storing the result in memory, and detecting the maximum value of the stored correlation values, whereby a synchronization code matching the received synchronization code is identified from among the candidate synchronization codes, and also rough received synchronization code synchronization timing is detected; and a second step of finding correlation values between an identified synchronization code and received signal, extracting from among those correlation values and storing in memory correlation values in the vicinity of the rough synchronization timing detected in the first step, and detecting the maximum value of the stored correlation values, whereby detailed received synchronization code synchronization timing is detected.

According to this method, items stored in memory in the first step are correlation values added in the time direction, or for which the maximum value has been detected, every predetermined number of sampling data, and therefore, as compared with the case where correlation values are stored directly, if the aforementioned predetermined number is designated as L, the required memory capacity in the first step is only 1/L. Also, in the first step, the maximum value of correlation values for which the code direction correlation is left unchanged is next detected, and therefore a synchronization code can be precisely identified with a small amount of processing (1/L). Moreover, items stored in memory in the second step are only correlation values in the vicinity of rough synchronization timing for one synchronization code, and therefore a small required memory capacity is sufficient. Furthermore, maximum value detection processing in the second step applies only to correlation values in the vicinity of rough synchronization timing for one synchronization code, and therefore the amount of processing is extremely small. It is thus possible to perform synchronization code identification and synchronization timing detection with a small required memory capacity and a small amount of processing.

A cell search method according to the present invention has a first step of finding correlation values between a received signal containing a synchronization code corresponding to the group of the cell to which a communication terminal apparatus belongs and a plurality of candidate synchronization codes, adding correlation values in the code direction, or detecting the maximum value of code direction correlation values, and storing the result in memory, and detecting the maximum value of the stored correlation values, whereby received synchronization code synchronization timing is detected; and a second step of finding correlation values between a received signal and a plurality of candidate synchronization codes at the detected synchronization timing, and detecting the synchronization code with the highest correlation value, whereby a synchronization code matching the received synchronization code is identified.

According to this method, items stored in memory in the first step are correlation values for which correlation values at points in time have been added in the code direction, or for which code direction maximum value detection has been performed, and therefore, as compared with the case where correlation values are stored directly, if the number of synchronization codes is designated as X, the required memory capacity in the first step is only 1/X. Also, in the first step, the maximum value of correlation values for which the time direction correlation is left unchanged is next detected, and therefore synchronization timing can be precisely detected with a small amount of processing (1/X). Moreover, in the second step it is only necessary to find correlation values between the synchronization codes and received signal at precise synchronization timing, and detect the maximum value of a plurality of correlation values at the same point in time, thus rendering memory unnecessary and also enabling maximum value detection to be performed in an extremely short time.

A cell search method according to the present invention has a first step of finding correlation values between a received signal containing a synchronization code corresponding to the group of the cell to which a communication terminal apparatus belongs and a plurality of candidate synchronization codes, finding per-unit code direction added correlation values (or code direction maximum correlation values) by dividing those correlation values into a plurality of units and adding correlation values at points in time within each unit in the code direction, or detecting the maximum value of code direction correlation values, and storing the results in memory, and detecting the maximum value of the stored code direction added correlation values (or code direction maximum correlation values), whereby received synchronization code synchronization timing is detected, and also synchronization codes subject to identification are narrowed down to synchronization codes within one unit; and a second step of finding correlation values between synchronization codes within a unit and a received signal at the detected synchronization timing, and detecting the synchronization code with the highest correlation value, whereby a synchronization code matching the received synchronization code is identified.

According to this method, as compared with the case where correlation values are stored directly, if the number of synchronization codes within a unit is designated as Y, the required memory capacity in the first step is only 1/Y. Also, in the first step, the maximum value of code direction added correlation values (or code direction maximum correlation values) for which the time direction correlation is left unchanged is detected, and therefore synchronization timing can be precisely detected with a small amount of processing (1/Y), and synchronization codes subject to identification can be limited to synchronization codes within one unit. Moreover, in the second step it is only necessary to find correlation values between synchronization codes within a unit and a received signal at precise synchronization timing, and detect the maximum value of a plurality of correlation values at the same point in time, thus rendering memory unnecessary and also enabling maximum value detection to be performed in an extremely short time. Furthermore, since correlation values need only be found for synchronization codes within a unit, the amount of correlation computation processing can be reduced.

In a cell search method according to the present invention, in the above-described first step, correlation values between a received signal and a plurality of candidate synchronization codes are found by means of matched filters, and in the second step, correlation values between a received signal and a plurality of candidate synchronization codes are found by means of correlators.

According to this method, it is possible to simplify the configuration necessary for second step processing.

A communication terminal apparatus according to the present invention has a configuration comprising a correlation value acquisition section that finds correlation values between a received signal containing a synchronization code corresponding to the cell to which the communication terminal apparatus belongs and a plurality of candidate synchronization codes, a storage section that stores those correlation values, a maximum value detection section that identifies a synchronization code matching the received synchronization code by detecting the maximum value of the stored correlation values and also detects the received synchronization code synchronization timing, a time direction added/maximum value detection section that finds a time direction added correlation value (or time direction maximum correlation value) by performing time direction addition or maximum value detection of correlation values every predetermined number of sampling data, and a code direction added/maximum value detection section that finds a code direction added correlation value (or code direction maximum correlation value) by taking a predetermined number of correlation values as a unit and performing code direction addition or maximum value detection of correlation values at points in time for each unit; wherein, as first-stage processing, rough identification processing and rough timing detection processing are performed by storing added correlation values (or maximum correlation values) obtained by the time direction added/maximum value detection section and code direction added/maximum value detection section in the storage section, and detecting the maximum value of the stored added correlation values (or maximum correlation values) by means of the maximum value detection section; and as second-stage processing, detailed identification processing and detailed timing detection processing are performed by storing in the storage section only correlation values in the vicinity of roughly detected timing of a synchronization code roughly identified in the first-stage processing from among the correlation values obtained by means of the correlation value acquisition section, and detecting the maximum value of the stored correlation values by means of the maximum value detection section.

According to this configuration, items stored in the storage section in the first-stage processing are rough correlation values, and therefore a small memory capacity is sufficient. Also, maximum value detection processing performed by the maximum value detection section in the first-stage processing need only be performed for rough correlation values (that is, a small quantity of data), and therefore a small amount of processing is sufficient. Moreover, items stored in the storage section in the second-stage processing are only correlation values for narrowed-down synchronization codes, and therefore a small memory capacity is sufficient. Furthermore, maximum value detection processing performed by the maximum value detection section in the second-stage processing applies only to correlation values for narrowed-down synchronization codes, and therefore a small amount of processing is sufficient. As a result, it is possible to simplify the configuration of the storage section and the maximum value detection section.

A communication terminal apparatus according to the present invention has a configuration wherein the time direction added/maximum value detection section and code direction added/maximum value detection section are provided in a mutually dependent arrangement, with correlation values for which time direction and code direction addition or maximum value detection has been performed being stored in the storage section.

According to this configuration, the quantity of data to be stored in the storage section can be reduced, enabling the configuration of the storage section to be simplified.

As described above, according to the present invention a cell search method and communication terminal apparatus that enable the required memory capacity to be reduced are implemented by dividing synchronization code identification and synchronization timing detection into two stages; performing narrowing down of synchronization codes or synchronization timing, or finding one or other precisely, based on rough correlation values between a received signal and candidate synchronization codes in the first stage processing; and performing precise synchronization code identification and synchronization timing detection in the second stage processing.

This application is based on Japanese Patent Application No.2001-295176 filed on September 26, 2001, and Japanese Patent Application No.2002-143192 filed on May 17, 2002, entire contents of which are expressly incorporated by reference herein.

### Industrial Applicability

The present invention is applicable to a mobile communication system that uses CDMA, for example.

## Claims

1. A cell search method comprising:
a first step of finding correlation values between a received signal containing a synchronization code corresponding to a group of a cell to which a communication terminal apparatus belongs and a plurality of candidate synchronization codes, finding rough correlation values from those correlation values and storing said rough correlation values in memory, and detecting a maximum value of stored rough correlation values, whereby synchronization codes corresponding to said received synchronization code are narrowed down from said candidate synchronization codes to some thereof and also rough synchronization timing of said received synchronization code is detected; and
a second step of storing correlation values between said received signal and said narrowed-down synchronization codes in memory, and detecting a maximum value of stored correlation values, whereby a synchronization code that matches said received synchronization code is identified from among said narrowed-down synchronization codes and also detailed synchronization timing of said received synchronization code is detected.

2. The cell search method according to claim 1, wherein in said first step, a rough correlation value is obtained by adding correlation values between a received signal and a plurality of candidate synchronization codes in a time direction every predetermined number of sampling data, and/or adding correlation values in a code direction at points in time.

3. The cell search method according to claim 1, wherein in said first step, a rough correlation value is obtained by detecting a maximum correlation value from among correlation values between a received signal and a plurality of candidate synchronization codes every predetermined number of sampling data, and/or detecting a maximum correlation value in a code direction from among correlation values at points in time.

4. The cell search method according to claim 1, wherein in said second step, correlation values are found between synchronization codes narrowed down in said first step and a received signal, correlation values in the vicinity of rough synchronization timing detected in said first step are extracted from among those correlation values and stored in memory, and a maximum value of stored correlation values is detected, whereby a synchronization code that matches a received synchronization code is identified and also detailed received synchronization code synchronization timing is detected.

5. A cell search method comprising:
a first step of finding correlation values between a received signal containing a synchronization code corresponding to a group of a cell to which a communication terminal apparatus belongs and a plurality of candidate synchronization codes, adding those correlation values in the time direction or detecting a maximum value thereof every predetermined number of sampling data and storing a result in memory, and detecting a maximum value of stored correlation values, whereby a synchronization code matching a received synchronization code is identified from among said candidate synchronization codes and also rough received synchronization code synchronization timing is detected; and
a second step of finding correlation values between said identified synchronization code and a received signal, extracting from among those correlation values and storing in memory correlation values in the vicinity of rough synchronization timing detected in said first step, and detecting a maximum value of stored correlation values, whereby detailed received synchronization code synchronization timing is detected.

6. A cell search method comprising:
a first step of finding correlation values between a received signal containing a synchronization code corresponding to a group of a cell to which a communication terminal apparatus belongs and a plurality of candidate synchronization codes, adding correlation values in a code direction or detecting a maximum value of code direction correlation values and storing a result in memory, and detecting a maximum value of stored correlation values, whereby received synchronization code synchronization timing is detected; and
a second step of finding correlation values between said received signal and said plurality of candidate synchronization codes at detected synchronization timing, and detecting a synchronization code with a highest correlation value, whereby a synchronization code matching a received synchronization code is identified.

7. A cell search method comprising:
a first step of finding correlation values between a received signal containing a synchronization code corresponding to a group of a cell to which a communication terminal apparatus belongs and a plurality of candidate synchronization codes, finding per-unit code direction added/maximum correlation values by dividing those correlation values into a plurality of units and adding correlation values at points in time within each unit in a code direction or detecting a maximum value of code direction correlation values and storing those code direction added/maximum correlation values in memory, and detecting a maximum value of stored code direction added/maximum correlation values, whereby received synchronization code synchronization timing is detected and also synchronization codes subject to identification are narrowed down to synchronization codes within one unit; and
a second step of finding correlation values between synchronization codes within said unit and said received signal at detected synchronization timing, and detecting a synchronization code with a highest correlation value, whereby a synchronization code matching a received synchronization code is identified.

8. A cell search method according to claim 6, wherein:
in said first step, correlation values between a received signal and a plurality of candidate synchronization codes are found by means of matched filters; and
in said second step, correlation values between a received signal and a plurality of candidate synchronization codes are found by means of correlators.

9. A cell search method according to claim 7, wherein:
in said first step, correlation values between a received signal and a plurality of candidate synchronization codes are found by means of matched filters; and
in said second step, correlation values between a received signal and a plurality of candidate synchronization codes are found by means of correlators.

10. A communication terminal apparatus comprising:
a correlation value acquisition section that finds correlation values between a received signal containing a synchronization code corresponding to a cell to which said communication terminal apparatus belongs and a plurality of candidate synchronization codes;
a storage section that stores those correlation values;
a maximum value detection section that identifies a synchronization code matching a received synchronization code by detecting a maximum value of stored correlation values and also detects received synchronization code synchronization timing;
a time direction added/maximum value detection section that finds a time direction added/maximum correlation value by performing time direction addition or maximum value detection of correlation values every predetermined number of sampling data; and
a code direction added/maximum value detection section that finds a code direction added/maximum correlation value by taking a predetermined number of correlation values as a unit and performing code direction addition or maximum value detection of correlation values at points in time for each unit; wherein:
as first-stage processing, rough identification processing and rough timing detection processing are performed by storing added correlation values obtained by said time direction added/maximum value detection section and code direction added/maximum value detection section in said storage section, and detecting a maximum value of stored added/maximum correlation values by means of said maximum value detection section; and
as second-stage processing, detailed identification processing and detailed timing detection processing are performed by storing in said storage section only correlation values in the vicinity of roughly detected timing of a synchronization code roughly identified in said first-stage processing from among correlation values obtained by means of said correlation value acquisition section, and detecting a maximum value of stored correlation values by means of said maximum value detection section.

11. A communication terminal apparatus according to claim 10, wherein said time direction added/maximum value detection section and said code direction added/maximum value detection section are provided in a mutually dependent arrangement, and correlation values for which time direction and code direction addition or maximum value detection has been performed are stored in said storage section.
